# EUROPÄISCHE PATENTSCHRIFT

(11) **EP 2 823 877 B1**
(45) Veröffentlichungstag und Bekanntmachung des Hinweises auf die Patenterteilung: **09.11.2016**
(21) Anmeldenummer: 13004173.4
(22) Anmeldetag: 23.08.2013
(51) Int. Cl.: B01D 61/00, B01D 61/02, C02F 1/44

(54) **Filterprüfung einer Wasseraufbereitungsanlage**
Filter testing of a water treatment system
Contrôle du filtre d'une installation de production d'eau

(30) Priorität: 13.07.2013 DE 102013011746
(43) Veröffentlichungstag der Anmeldung: 14.01.2015
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen

(56) Entgegenhaltungen:
- WO-A1-2012/136561
- WO-A1-2012/158355
- US-A1- 2007 295 650
- US-A1- 2010 237 021
- US-A1- 2011 240 557
- US-A1- 2013 146 514

## Beschreibung

Die Erfindung betrifft ein Fluidsystem zur Qualitäts-, Funktionsüberwachung und/oder Steuerung von physikalisch und chemisch wirkenden Filterstufen einer Wasservorbehandlung für den Betrieb einer Umkehrosmose-, oder einer anderen Wasseraufbereitungs- bzw. Wasserüberwachungsanlage.

Nachteil von Filterstrecken ist die nicht oder nur aufwändig durchzuführende Ferndiagnose von Chlor und Härte bzw. Überwachung des Verschmutzungsgrades von mechanischen Filtern.

Außerdem ist es aus Sicherheitsgründen, insbesondere bei Dialysewasseraufbereitungen, erforderlich, täglich eine aufwändige manuelle Dokumentation der Wasserhärte und oder des Chlorgehaltes durchzuführen, insbesondere um den Nachweis zu führen, dass das toxische Chlor aus der Flüssigkeit durch die eingesetzten Filter entfernt wurde.

Vorhandene Chlorsensoren zur Onlinemessung werden häufig nicht regelmäßig gechlort oder können bei Abwesenheit von Chlor in der Flüssigkeit keine zuverlässigen Messergebnisse liefern.

Um schwer lösbare Salze z.B. Kalzium- und oder Magnesium aus dem Wasser zu entfernen werden häufig Enthärter eingesetzt.

Bei Verwendung von Enthärtern, mit sauren Kationentauscherharzen, sind diese mittels Natriumchloridsolelösung regelmäßig zu regenerieren.

Diese Regeneration wird in der Regel mit Natriumchloridlösung durchgeführt, die in einem sogenannten Solebehälter, in dem Salz in einer vorherbestimmten Flüssigkeitsmenge aufgelöst wird, bereitgestellt ist.

Ein Ausfall der Regenerierung z.B wegen fehlender Natriumchloridsolelösung kann zu gravierenden Verkalkungen der nachfolgenden Anlagen führen.

Darüber hinaus neigen Enthärter wegen der relativ großen Harzvolumen zu mikrobiellem Wachstum mit nachfolgender Kontamination der durchfließenden Flüssigkeit.

Problematisch sind Filterverblockungen, weil der daraus resultierende Austausch von Filtermaterial normalerweise mit einer Betriebsunterbrechung einhergeht.

Die US 2010/237021 A1 befasst sich mit der Wasserreinigung eines Duschsystems in einem Flugzeug. Das Wasser fließt aus einer Duschkabine durch eine Leitung in eine Filtereinheit und von dort weiter in eine Steuereinheit die das gereinigte Wasser wieder in die Duschkabine zurück führt. Vor und hinter der Filtereinheit führen Leitungen zu einer Druckerfassungseinheit, die den Druck P1 vor der Filtereinheit und den Druck P2 hinter der Filtereinheit misst und die Druckdifferenz bestimmt. Wenn ein zu großer Druckabfall gemessen wird, wird ein Rückspülvorgang durch die Filtereinheit ausgelöst. In den zur Druckerfassungseinheit führenden Leitungen befinden sich keine Ventile, so dass die Druckerfassungseinrichtung kontinuierlich mit dem in den Leitungen befindlichen Wasser in Kontakt steht, um den Druck in den Leitungen zu messen. Dies bedeutet, dass das Wasser in den Leitungen unbeweglich steht. Das von der Duschkabine kommende Wasser ist erheblich verschmutzt, was ebenfalls für das Wasser in der vor der Filtereinheit abgezweigten Leitung der Fall ist, die zu der Druckerfassungseinheit führt. Da das Wasser in der Leitung steht, entwickeln sich in der Leitung zwangsläufig Ablagerungen, die die Leitung allmählich zusetzen. Hierdurch wird die Genauigkeit der Druckmessung unbemerkt beeinträchtigt. Da die Druckerfassungseinheit zudem ständig mit dem Wasserdruck in den beiden Leitungen beaufschlagt wird, lässt sich auch nicht feststellen, ob die Druckerfassung überhaupt richtige Werte ergibt. Das bedeutet, dass die Druckerfassungseinheit nicht zuverlässig Informationen über die Funktionsfähigkeit der Filtereinheit liefern kann. Die WO 2012/136561 beschreibt eine Wasserbehandlungsanlage und das Weiterleiten an die zentrale Steuereinheit (5) der Druckwerte, die vor und nach jeder Filterstufe (24; 3) durch Drucksensoren (22, 8, 9) ermittelt werden.

Die erfindungsgemäße Wasseraufbereitungsanlage mit einer Wasserleitung mit mehreren Filterstufen ist dadurch gekennzeichnet, dass vor und nach den Filgerstufen jeweils eine Leitung von der Wasserleitung abzweigt, die mit einem durch eine Steuereinrichtung schaltbaren Ventil versehen ist und zu einer Drucksensoreinrichtung führt, die ein gemeinsamer Drucksensor zur Messung eines Druckabfalls aller Filterstufen ist und mit einer elektronischen Auswerteeinrichtung verbunden ist, um die jeweiligen Druckdifferenzen der Filterstufen zu ermitteln und dass zur atmosphärischen Entlastung der Drucksensoreinrichtung Ventile angeordnet sind.

Das erfindungsgemäße Verfahren zur Funktionsüberwachung der Filterstufen einer Wasseraufbereitungsanlage ist dadurch gekennzeichnet, dass vor und nach den Filterstufen Teilströme des Wassers einem gemeinsamen Drucksensor zugeführt werden, der für jede Filterstufe den jeweiligen Druckabfall misst, wobei die Messwerte elektronisch ausgewertet werden und dass der Drucksensor zwischen zwei Messungen über ein Ventil atmosphärisch entlastet wird.

Ziel der Erfindung ist die Entwicklung einer Aktor-, Sensorsteuerung und einer Software, die es dem Anwender ermöglichen, die Funktionalität einer Anlage per online-Zugriff zu bewerten und auf dieser Basis eine Ferndiagnose über den aktuellen Betriebszustand zu erhalten.

Um den normativen und oder hausinternen Anforderungen zu genügen, können mit der automatischen Registrierung gleichzeitig die erforderlichen Dokumentations-nachweise durch die angeschlossene EDV erbracht werden.

Durch die angestrebte anlagenspezifische Auswertung durch Analyse und Visualisierung der Betriebsparameter wird es möglich, eine azyklische Verteilung der Service-Einsätze und damit eine Verringerung der Servicezahl zu erreichen.

Auf dieser Basis ist ein ökonomisches und ökologischeres Vorgehen möglich, da somit der Einsatz von geschultem Personal vor Ort besser koordiniert und verschleißbedingte Ausfälle gezielt und präventiv vermieden werden können.

Um die vorgenannten Nachteile zu vermeiden, bzw. der Zielsetzung zu entsprechen, werden nach einem Gesichtspunkt der Erfindung vor und nach den Filterstufen mittels geschalteten Ventilen Teilströme zu dem entsprechenden Sensor geführt und durch elektronische Messeinrichtungen ausgewertet. Wobei diese Mess auch integraler Bestandteil von nachfolgenden Anlagen einer Wasse und/oder auch eine Leitwarte sein können. Wobei ein bidirektionale Beeinflussung von Aktoren und Sensoren möglich ist.

Mit Vorteil werden mit einem elektronischen Druckaufnehmer unterschiedliche mechanische Filterstufen online auf ihren Verschmutzungsgrad durch Drücke und Ermittlung der Druckdifferenz überwacht und bei geeigneten Filtern mit entsprechender Rückspülautomatik auch ein automatisches Rückspülprogramm eingeleitet.

Nach einem anderen Gesichtspunkt der Erfindung wird ein online messender Chlorsensor eingesetzt, dessen sicherheitsrelevante Funktion erfindungsgemäß überprüft wird, indem dem Sensor elektrolytisch erzeugtes Chlor are bekannter Konzentration zugeführt wird.
Das Messergebnis wird elektronisch registriert und dokumentiert.
Das Chlor kann aus einer vorhandenen Solelösung hergestellt werden.

Die Funktion des Enthärters, also die Filtration und Reduzierung der schwerlösbaren Calcium und Magnesiumsalze, kann durch einen ionensensitiven Calcium- und oder Magnesiumsensor überwacht werden.

Der Füllstand des Salzsolebehälters, bzw. das Restvolumen der Salze im Solebehälter, ist einfach mittels Waage zu überwachen. Dazu wird der auf ein Konstruktionselement mit Wäagezelle plaziert. Da das Untergestell unabhängig von dem verwendeten Solebehälter jederzeit mit Vorteil einzusetzen ist, können auch bereits im Betrieb befindliche Solebehälter mit dieser Überwachungseinrichtung bestückt werden.
Es ist möglich, das Solevolumen direkt- oder als Ampellösung mit M anzuzeigen, eine Weiterleitung und Registrierung an eine Leitwarte nachfolgenden Wasseraufbereitung, die z.B. als RO Anlage ausgebilde ist ebenfalls möglich.

Damit kann eine vom Betriebspersonal täglich durchzuführende Inspektion und Dokumentation des Salzvorrates im Solebehälter entfallen.

Ein regelmäßige leichte Chlorierung des Enthärters während der Regenerierung durch elektrolytisch, aus dem Solebehälter des Enthärters erzeugtem Chlor, reduziert das mikrobielle Wachstum im Enthärterharz und sorgt somit für keimfreiere Flüssigkeit.

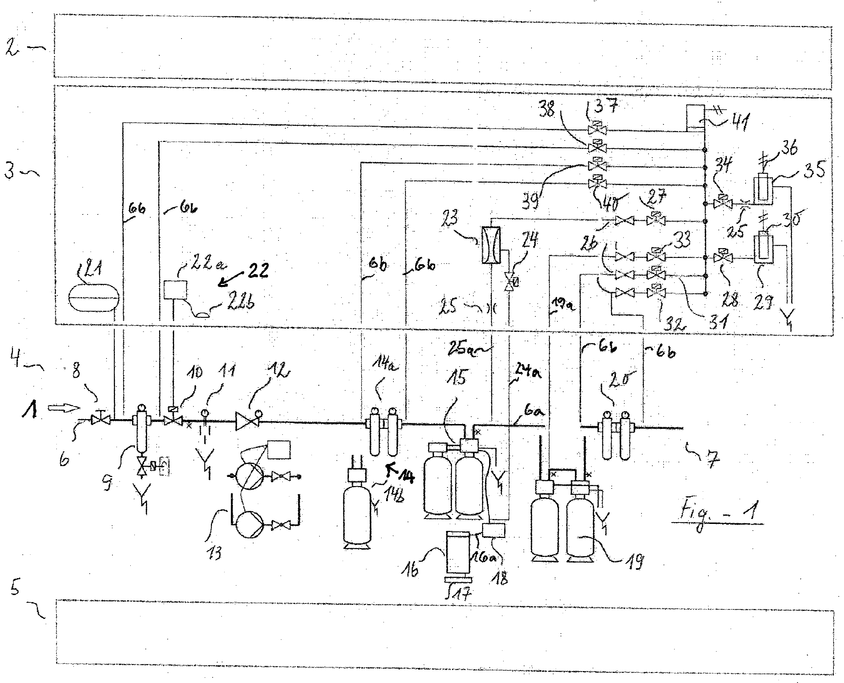

Figur 1 zeigt eine erfindungsgemäße Vorfiltrationseinheit mit einer mechanischchemischen Filterstufe (4), eine Aktor-Sensor Überwachungseinheit (3), eine zugehörige Auswerteelektronik (2) und eine mögliche, beispielsweise zu einer nachfolgenden Umkehrosmose gehörende Elektronik (5), wobei die Elektronik (2) auch als Leitwarten-Elektronik ausgebildet sein kann und mit Elektronik (5) kommuniziert.

Die mechanisch-chemische Filterstufe (4) ist hinsichtlich der Auswahl der angeordneten Filterstufen nur beispielhaft dargestellt, um die Funktion der erfindungsgemäßen Überwachung zu verdeutlichen.

Die beispielhafte Anordnung beginnt mit dem Wassereingang (6), einem Absperrventil (8), und einem automatisch rückspülbaren Vorfilter (9) mit Abflussventil und Drainageanschluss. Es folgt ein Sicherheitsabsperrventil (10), welches von einem Leckagemelder (22a) mit Flüssigkeitsensor (22b) aktiviert wird.

Weitere Komponenten können ein Rohrtrenner (11) und ein Rückflussverhinderer (12) zur Vermeidung einer Kontamination des Wassereingangs (6) sein.

Bei niedrigen Wasserzulaufdrücken besteht die Möglichkeit der Hinzunahme einer Druckerhöhungseinheit (13). Eine weitere Filterstufe (14) kann sowohl als Kartuschenfilter (14a), Sandfilter (14b), oder als hier nicht dargestellter Hohlfaserfilter im Nano- bzw. Ultraporenbereich ausgebildet sein.

(15) zeigt einen Enthärter, beispielsweise als Doppelenthärter dargestellt, der in der Regel mit starksaurem, kationenhaltigem Harz gefüllt wird, welches bei Erschöpfung regelmäßig mit NaCl-Lösung aus der Salzsoleaufbereitung (16) zu regenerieren ist. Dabei ist es wichtig, den Füllstand des Salzes im Salzsolebehälter (16) zu überwachen. Dies erfolgt mit einer Wäageeinrichtung (17), die als eigenständiges konstruktives Untergestell ausgebildet ist.

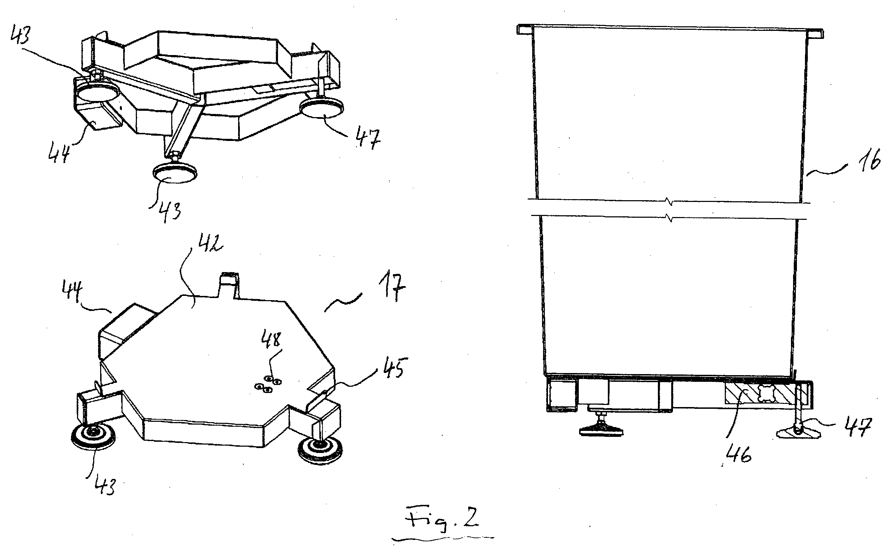

Gemäß Figur 2 besteht die Wäageeinrichtung (17) aus einer Wäagezelle (46) deren Signal von Elektronik (44) an der Wäageplattform (42) verstärkt, elektronisch aufbereitet, oder auch von Elektronik (2) als auch von einer evtl. nachfolgenden Elektronik (5) verarbeitet werden kann. Dabei können voreingestellte Gewichtsgrenzwerte des Solebehälters überwacht u. optisch bzw. akustisch zur Anzeige bzw. bei EDV techn. Verarbeitung ferndiagnostiziert werden.

Die Wäagezelle (46) ist an der Wäageplattform (42) mittels Schrauben (48) so befestigt, dass ein Drittel des Sole- bzw. Salzgewichtes auf dem Messfuß (47) lastet. Zur Seitenführung des Solebehälters sind die Seitenbegrenzungen (45) angebracht.

Mittels Elektrolyseeinrichtung (18) kann während des Regenerationsvorgangs des Enthärters (15) chlorhaltige Lösung aus der zur Elektrolysezelle (18) fließenden Salzsole gebildet werden. Dabei versteht es sich, dass die Chlorkonzentration von der Solekonzentration, aber im Wesentlichen von der Höhe der elektrisch zugeführten Leistung zur Elektrolysezelle abhängt. Der mikrobielle Aufwuchs im Enthärterharz wird dadurch stark reduziert.

(19) zeigt einen doppelten Kohlefilter/Dechlorierungseinrichtung, der zur Filtration des Chlors eingesetzt wird.

Filterstufe (20) kann als Feinfilterstufe kleinste Partikel aus dem Filterwasser (7) entfernen, bevor es beispielweise einer Umkehrosmoseanlage oder einer Trinkwasseranlage zugeführt wird.

Die Aktor-Sensor-Einheit (3) kann mit einem elektronischen Wasserzähler (21) zur Registrierung und Meldung der Wasserverbräuche bestückt werden.

Zur Überwachung des Chlorgehalts der zugeführten Flüssigkeit befindet sich in einer Chlorsensorkammer (29) vorzugsweise ein Chlorsensor (30), entweder zur Messung des gesamten Chlors oder des freien Chlors.

Die Chlorsensorkammer (29) hat einen Zufluss und einen freien Abfluss. Direkt vor der Sensorkammer befindet sich das Freigabeventil (28).

Üblicherweise kann die zugeführte Flüssigkeit vom Wasserversorger mit Chlor unterschiedlicher Konzentrationen gechlort werden, wobei je nach Hygienezustand unter Umständen zeitweise kein Chloreintrag vorhanden ist.

Insofern ist in diesem Fall keine Aussage über die ordnungsgemäße Funktion des Sensors (30) möglich.

Zur regelmäßigen Überprüfung des Chlorsensors wird das Testventil (27), das Soleansaugventil (24), wie auch das Freigabeventil (28) geöffnet und die Elektrolysezelle (18) eingeschaltet. Dabei wird Sole beziehungsweise Chlorhaltige Lösung in einem ausgewählten Konzentrationsverhältnis aus dem Behälter (16) über das einstellbare Soleansaugventil 24 und die Pumpe (23) angesaugt, mit Flüssigkeit über Flussdrossel (25) vermischt, zur Messkammer (29) weitergeleitet, über Chlorsensor (30) registriert und mit der Elektronik (2) beziehungsweise (5) ausgewertet.

Durch diesen regelmäßigen Test kann die ordnungsgemäße Funktion der Messze!le (30) sichergestellt werden.

Es liegt im Sinne der Erfindung eine Bereitstellung und Überwachung der Natriumchloridsolelösung auch ausschließlich zum Zwecke eines Chlorsensormonitorings, unabhängig von einem Enthärter oder weiteren Filterstufen einzusetzen. Dabei sind die Ansaugleitung der Solelösung und die Elektrolysezelle für die elektrolytische Chlorerzeugung unabhängig von der Soleansaugleitung und der Elektrolysezelle des Enthärters geführt.

Pumpe (23) ist beispielhaft als Venturipumpe dargestellt, andere Pumpentypen sind zur Erreichung der Funktion möglich, wobei in diesem Falle eine Zudosierung der chlorhaltigen Lösung mittels einer nicht dargestellten Pumpe aus Leitung 24a in Leitung 25a erfolgt.

Zur Überwachung der korrekten Kohlefilterfunktion/Dechloriereinrichtung (19) kann zunächst ein Ventil, beispielsweise (40) oder (27) geöffnet werden. Ebenso wird Freigabeventil (28) geöffnet. Falls sich Chlor in der zugeführten Flüssigkeit befindet, wird dies über den vorher verifizierten Chlorsensor (30) registriert.

Danach werden nacheinander die Ventile (33), (31) oder auch (32) geöffnet, ebenso wird das Chlorfreigabeventils (28) geöffnet. So können die Filterstufen des Kohlefilters getestet werden. Registriert der Chlorsensor das Nichtvorhandensein von Chlor ist die Überprüfung des Filters erfolgreich abgeschlossen. Es liegt im Sinne der Erfindung, dass auch diese Messung eigenständig ausgeführt und EDV technisch registriert werden kann.

Zur Überwachung der Filterstufen (9), (14), (20) wird der Druckaufnehmer (41) wahlweise und nacheinander mit den an den Filterstufen herrschenden Drücken über die in Fig. 1 angeordneten Ventile vor oder nach den Filterstufen beaufschlagt.

So findet beispielweise die Überwachung des Druckabfalles der Filterstufe (9) mittels Messung des Eingangsdruckes über Ventil (37) und die Überwachung des Ausgangdruckes durch das Ventil (38) statt.

Äquivalent zu der vorgenannten Messung sind in Figur 1 die Messung der Druckabfälle durch Schaltung der Ventile(39 / 40) für die Filterstufen (14) und der Ventile (31 / 32) für Filterstufe (20) nachzuvollziehen.

Die Ermittlung der Druckabfälle an Enthärtung (15) und Dechlorierung (19) ist durch ein aufeinander folgendes Schalten der Ventile (40, 27, 33, 31) ebenfalls möglich.

Eine atmosphärische Entlastung des Drucksensors (41) generell oder zwischen 2 Messungen kann über Ventil (34) als auch (28) erfolgen.

Durch Messung des Flusses durch Leitung 6 mit Wasseruhr/ Flussmesser (21) oder auch einer entsprechenden Flussmessung in einer nachfolgenden Aufbereitung, können die an den Filtern gemessenen Druckwerte mittels Elektronik (2, 5) auf Standard- bzw. Mittelwerte errechnet und ein Warn-, Austausch-, Spül-, oder Wartungszeitpunkt für voreingestellte Druckdifferenzen prognostiziert werden.

Da es sich bei der Ermittlung der Filter - Druckdifferenzen in der Regel um relative Messungen handelt ist die Verwendung eines einzigen Drucksensors (41), sowohl kostenmäßig, als auch hinsichtlich des Kalibrieraufwandes vorteilhaft.

Normalerweise sind die Wassereingangsdrücke an Leitung (6) z.B. an Filter (9) bekannt, sodass der Drucksensor (41) vor Beginn eines Messzyklus mit einem bekannten Druck beaufschlagt im Rahmen einer Wartung oder Techniker Inspektion zu verifizieren ist.

Eine vorteilhafte Ausgestaltung der Druckmessung ist die Ermittlung von Druckmittelwerten mittels Elektronik (2, 5) an den jeweiligen Filtern (9, 14, 15, 19, 20) indem beispielsweise 50 Messungen zu einem Mittelwert zusammengefasst und über einen beispielhaften Zeitraum von 1000 Betriebsstunden dargestellt werden.

Änderungen die auf ein Lebensdauerende des Sensors (41) oder des Verblockens der o.a. Filter zurückzuführen sind, lassen sich damit EDV - technisch erkennen bzw. prognostizieren und fernabfragen.

Zur Überwachung der korrekten Funktion des Enthärters (15) wird zunächst Ventil, (40) geöffnet und dem Calciumsensor (36) durch das geöffnete Ventil (34) Hartwasser über Messkammer (35) zugeführt.

Im Anschluss wird enthärtete Flüssigkeit über Flussdrossel (25), Ventile (27, 34) in die Messkammer (35) zum Ionensensitiven Calciumsensor (36) geleitet.

**Legende**

| | |
|---|---|
| 1. | Vorfiltration mit Sensorpaket |
| 2. | Elektronik Sensorpaket |
| 3. | Aktor- und Sensoreinheit |
| 4. | Vorfiltrationskomponenten |
| 5. | Elektronik Nachfiltration |
| 6. | Wassereingang |
| 7. | Filterwasser |
| 8. | Absperrventil |
| 9. | Rückspülbarer Vorfilter mit Reinigungsventil |
| 10. | Sicherheitsabsperrventil |
| 11. | Rohrtrenner |
| 12. | Rückflussverhinderer |
| 13. | Druckerhöhungseinheit |
| 14. | Feinfilterstufe 2 |
| 15. | Enthärtungsstufe |
| 16. | Salzsoleaufbereitung/ Soletank |
| 17. | Wäageeinheit |
| 18. | Elektrolysezelle |
| 19. | Dechlorierungsstufe/ Kohlefilter |
| 20. | Feinfilterstufe 3 |
| 21. | Wasseruhr/ Flussmesser |
| 22. | Leckagemeldung mit Sensor |
| 23. | Solepumpe |
| 24. | Soleansaugventil |
| 25. | Flussdrossel |
| 26. | Rückflussverhinderung |
| 27. | Chlorsensortestventil / Calciumprüfventil I |
| 28. | Chlorsensorfreigabeventil |
| 29. | Chlorsensorkammer |
| 30. | Chlorsensor |
| 31. | Chlorprüfventil II / Feinfilterstufe 3 Eingangsdruck |
| 32. | Chlorprüfventil III / Feinfilterstufe 3 Ausgangsdruck |
| 33. | Chlorprüfventil I |
| 34. | Calciumsensorfreigabeventil |
| 35. | Calciumsensorkammer |
| 36. | Calciumsensor |
| 37. | Feinfilterstufe 1 Eingangsdruck |
| 38. | Feinfilterstufe 1 Ausgangsdruck |
| 39. | Feinfilterstufe 2 Eingangsdruck |
| 40. | Feinfilterstufe 2 Ausgangsdruck/ Calciumtestventil |
| 41. | Drucksensor |
| 6a | Leitungen |
| 6b | |
| 16a | |
| 19a | |
| 24a | |
| 25a | |
| 42. | Plattform |
| 43. | Einstellbare Füße |
| 44. | Elektronik |
| 45. | Seitenbegrenzung |
| 46. | Wäagezelle |
| 47. | Messfuss |
| 48. | Befestigung Wäagezelle |

## Patentansprüche

1. Wasseraufbereitungsanlage, insbesondere Umkehrosmoseanlage, mit einer Wasserleitung mit mehreren Filterstufen,
**dadurch gekennzeichnet,**
**dass** vor und nach den Filterstufen (9, 14, 20) jeweils eine Leitung (6b) von der Wasserleitung (6a) abzweigt, die mit einem durch eine Steuereinrichtung schaltbaren Ventil (37, 38; 39, 40; 31, 32) versehen ist und zu einer Drucksensoreinrichtung (41) führt, die ein gemeinsamer Drucksensor zur Messung eines Druckabfalls aller Filterstufen (9, 14, 20) ist und mit einer elektronischen Auswerteeinrichtung verbunden ist, um die jeweiligen Druckdifferenzen der Filterstufen zu ermitteln,
und **dass** zur atmosphärischen Entlastung der Drucksensoreinrichtung Ventile (28, 34) angeordnet sind.

2. Wasseraufbereitungsanlage nach Anspruch 1,
**dadurch gekennzeichnet,**
**dass** für jede Filterstufe (9, 14, 20) eine Rück-Spülautomatik und ein automatisches Rückspülprogramm vorgesehen ist.

3. Wasseraufbereitungsanlage nach Anspruch 1,
**dadurch gekennzeichnet,**
**dass** die Filterstufen einen rückspülbaren Vorfilter (9) mit Reinigungsventil, einen Feinfilter (14) und einen Feinstfilter (20) umfassen.

4. Verfahren zur Funktionsüberwachung der Filterstufen einer Wasseraufbereitungsanlage gemäß Anspruch 1, insbesondere einer Umkehrosmoseanlage,
**dadurch gekennzeichnet,**
**dass** vor und nach den Filterstufen (9,14,20) Teilströme des Wassers einem gemeinsamen Drucksensor (41) zugeführt werden, der für jede Filterstufe den jeweiligen Druckabfall misst, wobei die Messwerte elektronisch ausgewertet werden und
**dass** der Drucksensor (41) zwischen zwei Messungen über ein Ventil atmosphärisch entlastet wird.

5. Verfahren nach Anspruch 4,
**dadurch gekennzeichnet,**
**dass** bei Erreichen einer vorbestimmten Druckdifferenz ein automatisches Rückspülprogramm eingeleitet wird.

6. Verfahren nach den Ansprüchen 4 oder 5,
**dadurch gekennzeichnet,**
**dass** die Messergebnisse elektronisch registriert und dokumentiert werden.

7. Verfahren nach den Ansprüchen 4 bis 96
**dadurch gekennzeichnet,**
**dass** an den jeweiligen Filtern (9, 14, 15, 19, 20) mittels Elektronik (2,5) Differenzdruck-Mittelwerte ermittelt werden.

## Claims

1. A water treatment system, particularly a reverse osmosis system, with a water conduit with a plurality of filter stages, **characterised in that** branching off from the water conduit (6a) upstream and downstream of the filter stages (9, 14, 20) there are respective conduits (6b), which are provided with a valve (37, 38; 39, 40; 31, 32) switchable by a control device and lead to a pressure sensor device (41), which is a common sensor for measuring a pressure drop of all the filter stages (9, 14, 20) and is connected to an electronic analysis device in order to determine the respective pressure differences of the filter stages and that valves (28, 34) are provided for atmospheric relief of the pressure sensor device.

2. A water treatment system as claimed in Claim 1, **characterised in that** an automatic device for back-flushing and an automatic back-flushing program are provided for each filter stage (9, 14, 20).

3. A water treatment system as claimed in Claim 1, **characterised in that** the filter stages include a back-flushable pre-filter (9) with a cleaning valve, a fine filter (14) and an ultrafine filter (20).

4. A method for functional monitoring of the filter stages of a water treatment system as claimed in Claim 1, particularly a reverse osmosis system, **characterised in that** upstream and downstream of the filter stages (9, 14, 20) branch flows of the water are conducted to a common pressure sensor (41), which measures the pressure drop for each filter stage, wherein the measured values are electronically analysed and that the pressure sensor (41) is atmospherically relieved between two measurements via a valve.

5. A method as claimed in Claim 4, **characterised in that** when a predetermined pressure difference is reached, an automatic back-flushing program is initiated.

6. A method as claimed in Claims 4 or 5, **characterised in that** the measurement results are electronically recorded and documented.

7. A method as claimed in Claims 4 to 6, **characterised in that** mean pressure difference values are determined at the respective filters (9, 14, 15, 19, 20) by means of an electronic system (2, 5).

## Revendications

1. Installation de production d'eau, en particulier installation à osmose inverse, comprenant un conduit d'eau avec plusieurs étages filtrants,
**caractérisée en ce**
**qu'**avant et après les étages filtrants (9, 14, 20) respectivement un conduit (6b) forme un embranchement par rapport au conduit d'eau (6a), lequel conduit est pourvu d'une soupape (37, 38 ; 39, 40 ; 31, 32) pouvant être commutée par un système de commutation et qui mène à un système de capteur de pression (41), qui est un capteur de pression commun servant à mesurer une baisse de pression de tous les étages filtrants (9, 14, 20) et qui est relié à un système d'analyse électronique afin de déterminer les différences de pression respectives des étages filtrants,
et **que** des soupapes (28, 34) sont disposées aux fins de la décharge atmosphérique du système de capteur de pression.

2. Installation de préparation d'eau selon la revendication 1,
**caractérisée en ce**
**que** sont prévus, pour chaque étage filtrant (9, 14, 20), un mécanisme automatique de rétrolavage et un programme de rétrolavage automatique.

3. Installation de préparation d'eau selon la revendication 1,
**caractérisée en ce**
**que** les étages filtrants comprennent un préfiltre (9) à rétrolavage éventuel pourvu d'une soupape de nettoyage, un filtre fin (14) et un filtre ultrafin (20).

4. Procédé servant à surveiller le fonctionnement des étages filtrants d'une installation de préparation d'eau selon la revendication 1,
en particulier installation à osmose inverse,
**caractérisé en ce**
**qu'**avant et après les étages filtrants (9, 14, 20), des flux partiels de l'eau sont amenés à un capteur de pression (41) commun, lequel mesure, pour chaque étage filtrant, la baisse de pression respective, dans lequel les valeurs de mesure sont analysées de manière électronique, et
**que** le capteur de pression (41) est déchargé de manière atmosphérique entre deux mesures par l'intermédiaire d'une soupape.

5. Procédé selon la revendication 4,
**caractérisé en ce**
**que** lorsqu'une différence de pression prédéfinie est atteinte, un programme de rétrolavage automatique est lancé.

6. Procédé selon les revendications 4 ou 5,
**caractérisé en ce**
**que** les résultats de mesure sont enregistrés de manière électronique et étayés documents à l'appui.

7. Procédé selon les revendications 4 à 6,
**caractérisé en ce**
**que** les valeurs moyennes de pression différentielle sont déterminées au moyen d'un composant électronique (2, 5) sur les filtres (9, 14, 15, 19, 20) respectifs.
